# FASCICULE DE BREVET EUROPEEN

(11) **EP 0 689 005 B1**
(45) Date de publication et mention de la délivrance du brevet: **16.09.1998**
(21) Numéro de dépôt: 95401401.5
(22) Date de dépôt: 15.06.1995
(51) Int. Cl.: F23C 11/02, F22B 37/10, F16B 39/02, F16L 5/06, F16L 5/02

(54) **Agencement de fixation sur une paroi de foyer d'une conduite traversante destinée à déboucher dans un caisson**
Anordnung zur Befestigung eines zu einem Kasten führenden durchgehenden Rohres auf einer Wand
Arrangement for fastening to a wall a continuous conduit leading into a box

(30) Priorité: 20.06.1994 FR 9407524
(43) Date de publication de la demande: 27.12.1995
(73) Titulaire: GEC ALSTHOM Stein Industrie, 78140 Velizy-Villacoublay (FR)
(72) Inventeur: Maillot, Frederic, F-92140 Clamart (FR)
(74) Mandataire: Pothet, Jean Rémy Emile Ludovic

(56) Documents cités:
- DE-U- 8 511 316
- US-A- 3 805 891
- US-A- 4 418 650

## Description

La présente invention concerne un agencement de fixation sur une paroi de foyer d'une conduite traversante destinée à déboucher dans un caisson. Un tel agencement est montré dans le document US-A-4 418 650.

Elle concerne plus précisément un agencement de fixation sur une paroi de foyer d'une conduite traversante cette paroi par un orifice et destinée à déboucher dans un caisson soumis à une pression et à une température différentes de celles de foyer, ladite paroi comportant un écran extérieur métallique et une couche intérieure de matériau réfractaire.

Un tel agencement est en particulier destiné à la fixation d'un caisson de fluidisation alimentée par une conduite d'alimentation en air traversant une paroi de foyer à lit fluidisé éventuellement circulant. Mais il peut également être utilisé pour la fixation d'une conduite d'évacuation des cendres ou des suies en sortie de foyer ou d'échangeurs. Selon une utilisation particulière, un tel caisson peut être le caisson de fluidisation d'un lit fluidisé interne au foyer.

Une paroi de foyer est en général constituée d'un écran extérieur de tubes d'échange de chaleur reliés les uns aux autres par des ailettes planes soudées et d'une couche intérieure de matière réfractaire en particulier de béton réfractaire.

Un tel agencement de fixation doit permettre d'assurer la traversée de la conduite, l'étanchéité relative du foyer et du caisson et la dilatation différentielle de la paroi de foyer et de la paroi de caisson reliées, soumises à des pressions et à des températures différentes. L'invention propose un tel agencement fiable bien que particulièrement simple.

Pour ce faire, selon l'invention, l'agencement de fixation comporte :
- un moyen extérieur de solidarisation de la conduite audit écran,
- un tube de guidage métallique intérieur enfilé sur ladite conduite et dont une extrémité est intercalée entre ledit orifice et ladite conduite et dont l'autre extrémité est filetée extérieurement,
ce tube de guidage portant une rondelle rigide solidaire de celui-ci, disposée en butée contre la face intérieure de la couche intérieure et sur laquelle est posée une paroi du caisson pourvue d'un orifice de dimension supérieure à la section du tube de guidage, un dispositif d'étanchéité étant serré contre la paroi du caisson par un écrou vissé sur l'extrémité fileté du tube de guidage.

Selon un mode de réalisation préféré de l'invention caractérisé en ce que le dispositif d'étanchéité est une rondelle élastique de forme tronconique dont le diamètre extérieur est supérieur à la plus grande dimension de l'orifice de la paroi du caisson.

Avantageusement, une fois serré l'écrou est soudé sur le tube de guidage.

De préférence, ledit moyen de solidarisation est un manchon métallique extérieur soudé audit écran dans lequel est disposée et soudée ladite conduite.

Ladite rondelle peut être soudée sur ledit tube de guidage.

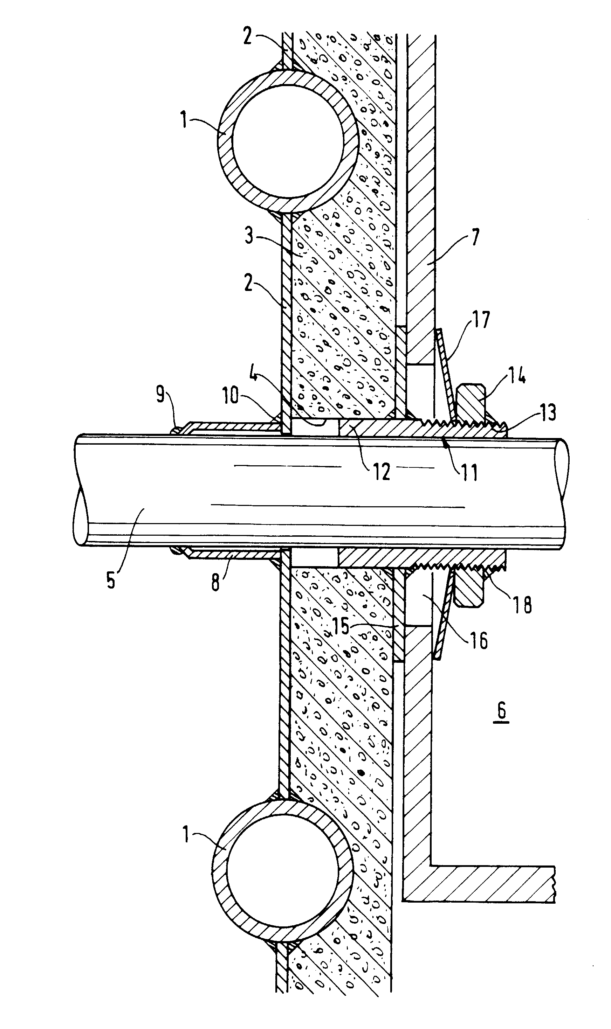

L'invention est décrite ci-après plus en détail à l'aide d'une figure unique ne représentant qu'un mode de réalisation préféré de l'invention.

Cette figure unique est une vue en coupe d'un agencement de fixation conforme à l'invention.

Une paroi de foyer comporte un écran extérieur de tubes 1 d'échange de chaleur reliés les uns aux autres par des ailettes 2 planes soudées et une couche intérieure 3 de matière réfractaire par exemple de béton réfractaire.

Cette paroi de foyer est pourvue d'un orifice 4 destiné au passage d'une conduite 5 destinée à déboucher dans un caisson 6 soumis à une température et à une pression différentes de celles du foyer.

L'agencement conforme à l'invention est destiné à la fixation sur la paroi du foyer de ladite conduite 5 et d'une paroi 7 dudit caisson 6.

Cet agencement comprend un moyen extérieur de solidarisation de la conduite 5 audit écran, constitué de préférence par un manchon 8 métallique extérieur soudé à une ailette 2 de l'écran par un cordon de soudure 10 et dans lequel est disposé la conduite 5 sur laquelle est soudé le manchon 8, par un cordon de soudure périphérique 9. Ce manchon 8 assure la fixation longitudinale de la conduite 5.

Il comprend également un tube de guidage 11 métallique intérieur enfilé sur la conduite 5. Une de ses extrémités 12 est intercalée entre l'orifice 4 et la conduite 5. Ce tube 11 assure la fixation transversale de la conduite 5.

L'autre extrémité 13 du tube de guidage 11 est filetée extérieurement et est destinée à recevoir un écrou 14 comme il sera vu plus loin.

Ce tube de guidage 11 porte une rondelle 15, de préférence soudée, qui vient en butée contre la face intérieure de la couche 3 et sur laquelle est posée la paroi 7 du caisson 6 pourvue d'un orifice 16 de dimension supérieure à la section du tube de guidage 11 et inférieure à celle de la rondelle rigide 15.

Une rondelle élastique 17 métallique de forme tronconique, de type frein d'écrou, est ensuite enfilée sur le tube de guidage 11.

Elle est serrée contre la paroi 7 du caisson 6 par l'écrou 14 vissé sur l'extrémité 13 filetée du tube de guidge 11. Une fois vissé, l'écrou 14 est soudé sur le tube de guidage 12 par un cordon de soudure 18.

La rondelle élastique 17 a un diamètre extérieur supérieur à la plus grande dimension de l'orifice 16 de la paroi 7 du caisson 6. Cet orifice 16 est de préférence circulaire et le diamètre extérieur de la rondelle 17 est donc supérieur à son diamètre.

La paroi 7 du caisson 6 est pincée entre la rondelle rigide 15 et la rondelle élastique 17. Ainsi est assurée l'étanchéité entre le foyer et le caisson 6.

Ainsi est également assurée la possibilité de dilatations différentielles entre la paroi 7 du caisson et la paroi du foyer.

## Revendications

1. Agencement de fixation sur une paroi de foyer d'une conduite (5) traversant cette paroi par un orifice (4) et destinée à déboucher dans un caisson (6) soumis à une pression et à une température différentes de celles de foyer, ladite paroi comportant un écran (1, 2) extérieur métallique et une couche (3) intérieure de matériau réfractaire, agencement caractérisé en ce qu'il comporte
- un moyen extérieur de solidarisation de la conduite (5) audit écran,
- un tube de guidage (11) métallique intérieur enfilé sur ladite conduite (5) et dont une extrémité (12) est intercalée entre ledit orifice (4) et ladite conduite (5) et dont l'autre extrémité (13) est filetée extérieurement,
ce tube de guidage (11) portant une rondelle (15) rigide solidaire de celui-ci, disposée en butée contre la face intérieure de la couche intérieure (3) et sur laquelle est posée une paroi (7) du caisson (6) pourvue d'un orifice (16) de dimension supérieure à la section du tube de guidage (11), un dispositif d'étanchéité (17) étant serré contre la paroi (7) du caisson (6) par un écrou (14) vissé sur l'extrémité (13) fileté du tube de guidage (11).

2. Agencement selon la revendication 1, caractérisé en ce que le dispositif d'étanchéité (17) est une rondelle élastique de forme tronconique dont le diamètre extérieur est supérieur à la plus grande dimension de l'orifice (16) de la paroi (7) du caisson (6).

3. Agencement selon la revendication 1 ou 2, caractérisé en ce qu'une fois serré, l'écrou (14) est soudé sur le tube de guidage (11).

4. Agencement selon l'une des revendications précédentes, caractérisé en ce que ledit moyen de solidarisation est un manchon (8) métallique extérieur soudé audit écran dans lequel est disposée et soudée ladite conduite (5).

5. Agencement selon l'une des revendications précédentes, caractérisé en ce que ladite rondelle (15) est soudée sur ledit tube de guidage (11).

## Patentansprüche

1. Anordnung zur Befestigung einer Rohrleitung (5) an einer Brennkammerwand, die diese Wand durch eine Öffnung (4) durchquert und vorgesehen ist, um in einen Kasten (6) zu münden, der einem anderen Druck und einer anderen Temperatur als denjenigen der Brennkammer ausgesetzt ist, wobei die Wand eine metallische äußere Abschirmung (1, 2) und eine innere Schicht (3) aus hitzefestem Material umfaßt, wobei die Anordnung dadurch gekennzeichnet ist, daß sie umfaßt:
- ein äußeres Mittel zum festen Verbinden der Rohrleitung (5) mit der Abschirmung,
- ein inneres metallisches Führungsrohr (11), das auf die Rohrleitung (5) aufgesteckt ist, von dem ein Ende (12) zwischen der Öffnung (4) und der Rohrleitung (5) festgeklemmt ist und von dem das andere Ende (13) ein Außengewinde trägt,
wobei dieses Führungsrohr (11) eine mit diesem fest verbundene starre Ringscheibe (15) trägt, die in Anschlag gegen die Innenseite der inneren Schicht (3) angeordnet ist und an der eine Wand (7) des Kastens (6) angeordnet ist, die mit einer Öffnung (16) versehen ist, deren Abmessung größer als der Querschnitt des Führungsrohres (11) ist, wobei eine Dichtungsvorrichtung (17) gegen die Wand (7) des Kastens (6) durch eine auf das Gewindeende (13) des Führungsrohres (11) geschraubte Mutter (14) gespannt ist.

2. Anordnung nach Anspruch 1, dadurch gekennzeichnet, daß die Dichtungsvorrichtung (17) eine elastische Ringscheibe von Kegelsrumpfform ist, deren Außendurchmesser größer ist als die größte Abmessung der Öffnung (16) der Wand (7) des Kastens (6).

3. Anordnung nach Anspruch 1 oder 2, dadurch gekennzeichnet, daß nach dem Festspannen die Mutter (14) am Führungsrohr (11) verschweißt ist.

4. Anordnung nach einem der vorhergehenden Ansprüche, dadurch gekennzeichnet, daß das Mittel zum festen Verbinden eine äußere metallische Hülse (8) ist, die an die Abschirmung geschweißt ist, in der die Rohrleitung (5) angeordnet und verschweißt ist.

5. Anordnung nach einem der vorhergehenden Ansprüche, dadurch gekennzeichnet, daß die Ringscheibe (15) an das Führungsrohr (11) geschweißt ist.

## Claims

1. A fastening system for fastening a through pipe (5) to a hearth wall, the pipe passing through the wall via an orifice (4) and opening into a box (6) subjected to a pressure and to a temperature that are different from those of the hearth, said wall being provided both with an outside metal screen (1, 2) and an inside layer of refractory material, said fastening system being characterized in that it comprises:
external pipe-securing means for securing the pipe (5) to said screen; and
an internal metal guide tube (11) fitted over said pipe (5) and having one of its ends (12) interposed between said orifice (4) and said pipe (5), its other end (13) being externally threaded;
the guide tube (11) carrying a rigid washer (15) which is secured thereto, which is disposed so as to abut against the inside face of the inside layer (3), and against which a wall (7) of the box (6) is mounted, which wall is provided with an orifice (16) that is larger than the cross-section of the guide tube (11), a sealing device (17) being clamped against the wall (7) of the box (6) by a nut (14) screwed onto the threaded end (13) of the guide tube (11).

2. A system according to claim 1, characterized in that the sealing device (17) is a frustoconical resilient washer having its outside diameter greater than the largest dimension of the orifice (16) in the wall (7) of the box (6).

3. A system according to claim 1 or 2, characterized in that once it has been tightened, the nut (14) is welded onto the guide tube (11).

4. A system according to any preceding claim, characterized in that said pipe-securing means are constituted by an external metal sleeve (8) welded to said screen, inside which sleeve said pipe (5) is disposed and welded.

5. A system according to any preceding claim, characterized in that said rigid washer (15) is welded to said guide tube (11).
